# EUROPEAN PATENT APPLICATION

(11) **EP 2 837 748 A1**
(43) Date of publication of application: **18.02.2015**
(21) Application number: 14180834.5
(22) Date of filing: 13.08.2014
(51) Int. Cl.: E03F 7/04, F16K 15/03

(54) **Anti-flood valve**

(30) Priority: 14.08.2013 GB 201314555
(71) Applicant: Larkin&Shoushani Solutions Pty Ltd, Mollymook, NSW 2539 (AU)
(72) Inventor: The designation of the inventor has not yet been filed
(74) Representative: EP&C

(57) **Abstract**

The invention relates to an anti-flood valve (10) for preventing fluids entering an outlet end of a fluid discharge pipe; said valve comprising a composite tubular body (12); said body comprising a flexible tubular element (14) and a rigid annular band (16) bonded around a discharge end (18) of said flexible tubular element (14); said valve provided with a hinged closure element (20) at said discharge end (18); said flexible tubular element (14) including proximate an opposite inlet end an integral outwardly projecting annular flexible lip (24); said flexible lip (24) providing a seal and an interference fit with internal walls of said fluid discharge pipe when said valve is inserted into said outlet end of said fluid discharge pipe for use.

## Description

### TECHNICAL FIELD

The present invention relates to fluid control fittings and, more particularly to a control valve for preventing fluids and other objects entering an outlet end of a fluid discharge pipe.

### BACKGROUND

Valves for ends of fluid or gas discharge pipes are known, such as pivoting flap valves to prevent ingress of rain typically found on the vertical exhaust pipes of trucks and farm machinery for example. Similar valves are commonly fitted to PVC outlet pipes extending from the exterior walls of buildings, most commonly to prevent the entry of vermin into the waste water system.

Valves for use in situations where the outlet end of a fluid discharge pipe may come to be immersed in a body of fluid and intrusion of that fluid is to be prevented, are also known. An example is described in international patent application WO2011/012581. The valve of this application comprises a rigid body with an external diameter somewhat less than the internal diameter of the outlet pipe for which it is intended. At least one annular seal in the form of an O-ring located in an annular groove of the body, is intended to provide both a seal and a means of retaining the valve in the outlet pipe.

A problem with this arrangement is that it is dependent on a close tolerance of the internal diameter of the waste pipe, with any deviation resulting in the body of the valve either too loose or so tight that insertion and removal are very difficult. Moreover the use of O-rings forcesdt an unavoidable offset between the entry into the rigid body and the internal wall surfaces of the outlet pipe, providing catch points for detritus build up.

Another problem with known valves is that the discharge end is generally square to the axis of the waste pipe into which it is placed so that with a waste pipe lying at a self draining slope, the hinged closure of the valve will hang slightly open allowing at least some fluid and possibly vermin to enter the waste pipe.

It is an object of the present invention to address or at least ameliorate some of the above disadvantages.

The term "comprising" (and grammatical variations thereof) is used in this specification in the inclusive sense of "having" or "including", and not in the exclusive sense of "consisting only of".

The above discussion of the prior art in the Background of the invention, is not an admission that any information discussed therein is citable prior art or part of the common general knowledge of persons skilled in the art in any country.

### SUMMARY OF INVENTION

Accordingly in one broad form of the invention there is provided an anti-flood valve for preventing fluids entering an outlet end of a fluid discharge pipe; said valve comprising a composite tubular body; said body comprising a flexible tubular element and a rigid annular band bonded around a discharge end of said flexible tubular element; said valve provided with a hinged closure element at said discharge end; said flexible tubular element including proximate an opposite inlet end an integral outwardly projecting annular flexible lip; said flexible lip providing a seal and an interference fit with internal walls of said fluid discharge pipe when said valve is inserted into said outlet end of said fluid discharge pipe for use.

Preferably flexibility of said flexible tubular element allows inward deformation of said flexible tubular element; said inward deformation decreasing an envelope of said flexible tubular element so as to allow its relatively frictionless insertion into said outlet end of said fluid discharge pipe.

Preferably said flexible tubular element has an external diameter generally equal to an internal diameter of a standard fluid discharge pipe.

Preferably a first portion of said flexible tubular element is of generally constant wall thickness.

Preferably said outwardly projecting annular flexible lip has a generally tapering wall thickness; said section from said first portion of said flexible tubular element to a tip of said flexible lip.

Preferably said tapering wall thickness is such that the external diameter of said flexible lip increases from an external diameter of said first portion towards said tip of said flexible lip, and the internal diameter of said flexible lip increases from an internal diameter of said first portion towards said tip.

Preferably an inlet end of said rigid annular band lies in a plane normal to an axis of said composite tubular body; an outer diameter of said rigid annular band generally equal to an outer diameter of a fluid discharge pipe into which said anti-flood valve is to be inserted.

Preferably a discharge end of said rigid annular band lies in a plane forming an angle with said axis of said composite tubular body.

Preferably said plane forming an angle with said axis slopes upwardly and rearwardly from an invert of said composite tubular body when said valve is inserted for use in a said fluid discharge pipe.

Preferably said rigid annular band is provided with a hinge structure for support of said hinged closure element; said hinge structure disposed at an uppermost area of said rigid annular band when said valve is inserted into a fluid discharge pipe for use.

Preferably said closure element is of generally elliptical form; an outer periphery of said closure element conforming to an outer periphery of said discharge end of said rigid annular band.

In a further broad form of the invention there is provided a method of installing an anti-flood valve in a discharge end of a fluid discharge pipe; said valve comprising a composite of a flexible tubular element and an rigid annular band around a discharge end of said valve; said valve further provided with a hinged closure element at a discharge end of said rigid annular band; said method including the steps of:
a) deforming said flexible tubular element so as to decrease an envelope of said flexible tubular element,
b) while distorted, inserting said flexible tubular element in an outlet end of said fluid discharge pipe,
c) releasing said flexible tubular element to allow said flexible tubular element to flex against internal surfaces of said fluid discharge pipe, and
wherein an annular lip projecting outwardly at an inlet end of said flexible tubular element forms both a seal and a friction fit with said internal surfaces of said fluid discharge pipe.

### BRIEF DESCRIPTION OF DRAWINGS

Embodiments of the present invention will now be described with reference to the accompanying drawings wherein:
Figure 1 is a perspective view of a preferred embodiment of an anti-flood valve according to the invention,
Figure 2 is a cross section view of the anti-flood valve of Figure 1,
Figure 3 is a further cross section view of the anti-flood valve of Figures 1 and 2 installed in the discharge end of a waste pipe for use.

### DESCRIPTION OF EMBODIMENTS

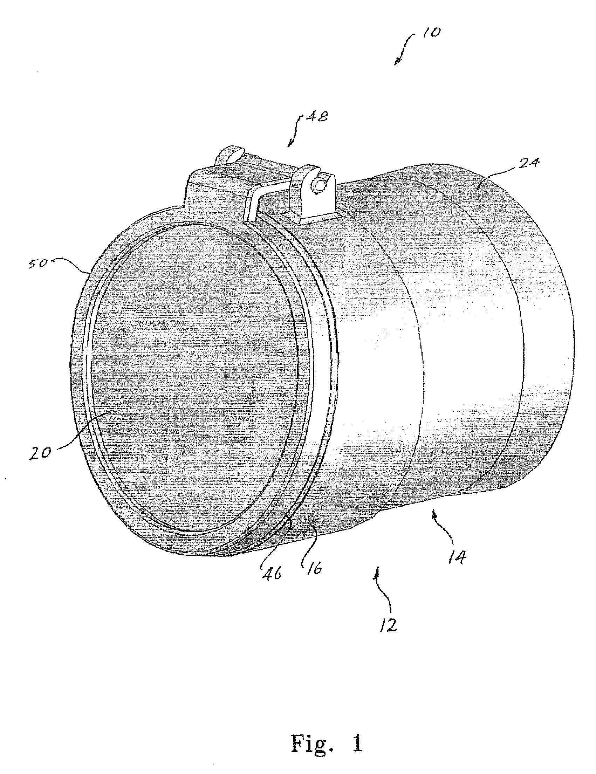

With reference to Figures 1 to 3 the anti-flood valve 10 of the present invention comprises a composite tubular body 12, formed of a flexible tubular element 14 and a rigid annular band 16 bonded around its discharge end 18. The valve 10 is provided with a hinged closure element 20 at the discharge end 18.

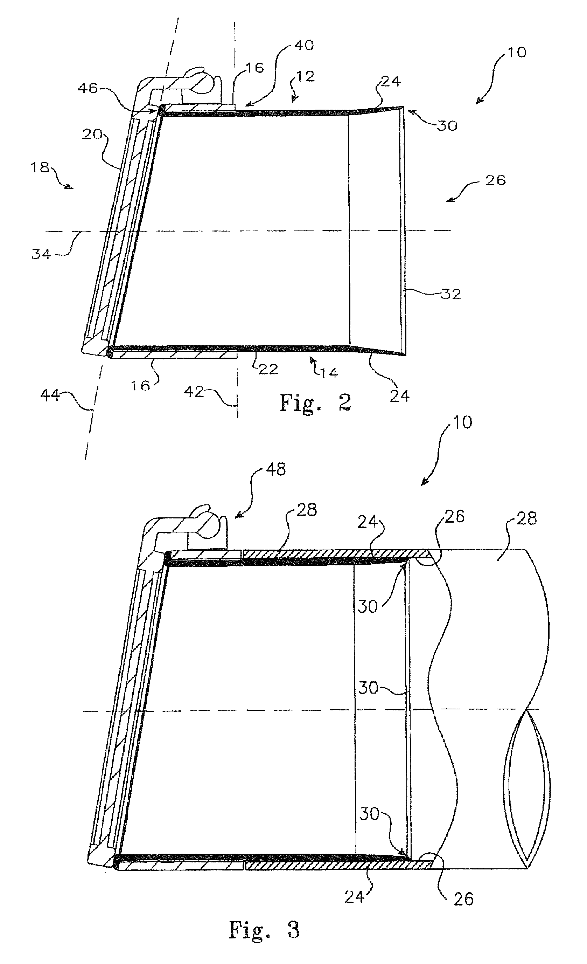

The flexible tubular element 14 includes a first portion 22 of a generally constant wall thickness, extending to an integral outwardly projecting annular flexible lip 24 proximate the opposite inlet end 26 of the valve. The lip 24 provides a seal and an interference fit with the internal walls 26 of a fluid discharge pipe 28 when the valve 10 is inserted into the outlet end 30 of the fluid discharge pipe for use, as shown in Figure 3.

The outwardly projecting annular flexible lip 24 has a cross section of generally tapering wall thickness extending rearwardly from the first portion 22 of the flexible tubular element, such that the external diameter of the flexible lip increases from the external diameter of the first portion 22 towards the outer end or tip 30, Likewise, its internal diameter also increases from the internal diameter of the first portion 22 towards the tip 30.

Preferably, the inlet end 26 of the valve 10 is further provided with an internal chamfer or fillet 32 so as to minimise the possibility of detritus being caught at the inlet end of the valve.

The inlet end 40 of the rigid annular band 16 lies in a plane 42 normal to the axis 34 of the composite tubular body 12. The outer diameter of the band 16 is preferably generally equal to the outer diameter of a fluid discharge pipe 28 into which the anti-flood valve 10 is to be inserted.

Preferably, the opposite, discharge end of the rigid annular band 16 lies in a plane 44 forming an angle with the axis 34 of the composite tubular body 12, with the plane 44 sloping upwardly and rearwardly from an invert of the composite tubular body 12 when the valve 10 is inserted for use in a fluid discharge pipe 28. Preferably also, the flexible tubular body portion 22 at the discharge end 18 is provided with a lip 46 curling around the edge of the band 16 to provide a flexible annular seal against which the closure element 20 lies when in a normally closed position.

The rigid annular band 16 is provided with a hinge structure 48 for support of the hinged closure element 20. the hinge structure 46 is disposed at an uppermost area of the rigid annular band when the valve 10 is inserted into a fluid discharge pipe 28 for use. The hinged closure element 20 is of a generally elliptical form with the outer periphery 50 of the closure element conforming to the outer periphery of the angled discharge end of the rigid annular band 16 and the lip 46. The slope of the plane 44 is chosen so that, with a fluid discharge pipe 28 lying at a typical self draining slope, the hinged closure element 20 will fall back under gravity against the opening formed by the discharge end of the band 16 and lip 46, when no fluid is being discharged from the pipe 28.

Preferably, the flexible tubular element 14 is formed of a neoprene or other suitable elastomer material, with the rigid annular band preferably formed of PVC or another suitable, relatively rigid polymer.

The flexibility of the flexible tubular element 14 allows it to be deformed inwardly so as to decrease the envelope, that is the volume, occupied by the flexible tubular element portion of the valve 10. This deformation and lessening of volume provides for relatively frictionless insertion into the outlet end of a fluid discharge pipe.

Thus a user can deform the flexible portion and, grasping a fold so formed from the inside, easily thrust the flexible portion into position in the waste pipe until the inlet end of the rigid annular band abuts the end of the pipe.

When the flexible portion is released, it springs back into its undistorted form to flex against the inside surfaces of the fluid discharge pipe. Consequently, the flexible outwardly projecting lip 24 is also flexed against the pipe's internal surfaces and the lip and outer tip 30 form a seal and provide a friction fit to secure the valve 10 within the pipe 28.

Should it become necessary to remove the valve from a pipe in which it is located, a user can grasp the edge at the inlet end of the flexible tubular portion, deform the portion to release its contact with the pipe's internal surface and thus readily pull the valve from the pipe.

## Claims

1. An anti-flood valve for preventing fluids entering an outlet end of a fluid discharge pipe; said valve comprising a composite tubular body; said body comprising a flexible tubular element and a rigid annular band bonded around a discharge end of said flexible tubular element; said valve provided with a hinged closure element at said discharge end; said flexible tubular element including proximate an opposite inlet end an integral outwardly projecting annular flexible lip; said flexible lip providing a seal and an interference fit with internal walls of said fluid discharge pipe when said valve is inserted into said outlet end of said fluid discharge pipe for use.

2. The anti-flood valve of claim 1, wherein flexibility of said flexible tubular element allows inward deformation of said flexible tubular element; said inward deformation decreasing an envelope of said flexible tubular element so as to allow its relatively frictionless insertion into said outlet end of said fluid discharge pipe.

3. The anti-flood valve of claim 1 or 2, wherein said flexible tubular element has an external diameter generally equal to an internal diameter of a standard fluid discharge pipe.

4. The anti-flood valve of any one of claims 1 to 3, wherein a first portion of said flexible tubular element is of generally constant wall thickness.

5. The anti-flood valve of any one of claims 1 to 4, wherein said outwardly projecting annular flexible lip has a generally tapering wall thickness; said section from said first portion of said flexible tubular element to a tip of said flexible lip.

6. The anti-flood valve of claim 5, wherein said tapering wall thickness is such that the external diameter of said flexible lip increases from an external diameter of said first portion towards said tip of said flexible lip, and the internal diameter of said flexible lip increases from an internal diameter of said first portion towards said tip.

7. The anti-flood valve of any one of claims 1 to 6, wherein an inlet end of said rigid annular band lies in a plane normal to an axis of said composite tubular body; an outer diameter of said rigid annular band generally equal to an outer diameter of a fluid discharge pipe into which said anti-flood valve is to be inserted.

8. The anti-flood valve of claim 7, wherein a discharge end of said rigid annular band lies in a plane forming an angle with said axis of said composite tubular body.

9. The anti-flood valve of claim 8, wherein said plane forming an angle with said axis slopes upwardly and rearwardly from an invert of said composite tubular body when said valve is inserted for use in a said fluid discharge pipe.

10. The anti-flood valve of any one of claims 1 to 9, wherein said rigid annular band is provided with a hinge structure for support of said hinged closure element; said hinge structure disposed at an uppermost area of said rigid annular band when said valve is inserted into a fluid discharge pipe for use.

11. The anti-flood valve of any one of claims 1 to 10, wherein said closure element is of generally elliptical form; an outer periphery of said closure element conforming to an outer periphery of said discharge end of said rigid annular band.

12. A method of installing an anti-flood valve in a discharge end of a fluid discharge pipe; said valve comprising a composite of a flexible tubular element and an rigid annular band around a discharge end of said valve; said valve further provided with a hinged closure element at a discharge end of said rigid annular band; said method including the steps of:
d) deforming said flexible tubular element so as to decrease an envelope of said flexible tubular element,
e) while distorted, inserting said flexible tubular element in an outlet end of said fluid discharge pipe,
f) releasing said flexible tubular element to allow said flexible tubular element to flex against internal surfaces of said fluid discharge pipe, and
wherein an annular lip projecting outwardly at an inlet end of said flexible tubular element forms both a seal and a friction fit with said internal surfaces of said fluid discharge pipe.
